# EUROPÄISCHE PATENTSCHRIFT

(11) **EP 1 450 594 B1**
(45) Veröffentlichungstag und Bekanntmachung des Hinweises auf die Patenterteilung: **11.10.2006**
(21) Anmeldenummer: 02791616.2
(22) Anmeldetag: 09.12.2002
(51) Int. Cl.: A01G 1/12

(54) **BODENBEARBEITUNGSGERÄT MIT EINEM SAMMELBEHÄLTER UND WALZENFÖRMIGER AUFNAHMEEINRICHTUNG**
GROUND PREPARATION DEVICE COMPRISING A COLLECTING CONTAINER AND A ROLLER-TYPE INTAKE UNIT
APPAREIL POUR LA PREPARATION DU SOL, EQUIPE D'UN RESERVOIR COLLECTEUR ET D'UN DISPOSITIF DE RAMASSAGE SOUS FORME DE ROULEAU

(30) Priorität: 07.12.2001 DE 20119896 U
(43) Veröffentlichungstag der Anmeldung: 01.09.2004
(73) Patentinhaber: Wiedenmann GmbH, 89192 Rammingen (DE)
(72) Erfinder: WIEDENMANN, Georg, 89192 Rammingen (DE)
(74) Vertreter: Kastel, Stefan
(86) Internationale Anmeldenummer: PCT/DE2002/004512
(87) Internationale Veröffentlichungsnummer: WO 2003/053133

(56) Entgegenhaltungen:
- US-A- 4 914 774
- US-A- 4 930 530
- US-A- 5 142 852

## Beschreibung

Die Erfindung betrifft ein Bodenbearbeitungsgerät für kommunale Flächen, Parkanlagen, Sportflächen, insbesondere Golfplätzen, und dgl. in Ausbildung für den Anbau als Huckepackgerät mit nur am Boden angreifender Walze oder Anhängegerät an motorgetriebene Fahrzeuge, insbesondere auch Kleintraktoren, das einen Sammelbehälter für die Aufnahme von auf dem Boden befindlichen Gut wie Gras, Laub oder dgl., eine Zuführvorrichtung für dieses Gut zu dem Sammelbehälter sowie eine Aufnahmeeinrichtung für das Gut von dem Boden und dessen Übergabe an die Zuführvorrichtung aufweist, wobei rotierend angetriebene Teile des Gerätes vorzugsweise an den Antriebsmotor des Fahrzeugs getrieblich anschließbar sind.

Ein derartiges Bodenbearbeitungsgerät ist bereits aus US-A-4 930 530 bekannt.

Bodenbearbeitungsgeräte der in Rede stehenden Art sind beispielsweise solche, die frisch gemähtes Gut, aber auch Laub und dergleichen aufnehmen, wenn sich das Gerät in Anbau an ein Zugfahrzeug über den zu behandelnden Boden bewegt.

Für den vorstehenden Einsatz sind Zugfahrzeuge - vor allem für den kommunalen Bereich wie auch die Golfplatzpflege konzipierte Kleintraktoren - bekannt, die beispielsweise ein über eine Fahrzeugmotor über einen Zapfwellenanschluss angetriebenen Sichelmäher oder dergleichen mit sich führen, der frontseitig oder als Zwischenachsgerät angeordnet ist und das gemähte Gut seitlich in eine Schlauchleitung abwirft, die an dem Eingang eines Sauggebläses angeschlossen ist, dessen Ausgang in einen Sammelbehälter für das Mähgut mündet. Diese Bauweise verlangt regelmäßig Abmessungen des derart versehenen Zugfahrzeugs jedenfalls einseitig über seine seitlichen Abmessungen hinaus, weil die Schlauchleitung zumindest an den Hinterachsrädern außenseitig vorbei geführt ist und der Sauger wiederum in der Regel an dem nachfolgenden Sammelbehälter-Anhänger oder - huckepackgerät seitlich über die Zugfahrzeugabmessung hinausragend angeordnet ist. Darüber hinaus ragen vielfach die seitlichen Trageinrichtungen einschließlich eines Hubgestänges etc. in seitlicher Anordnung an dem Sammelbehälter ebenfalls über die seitlichen Abmessungen des Zugfahrzeugs hinaus. Das hier angesprochene Sauggebläse arbeitet darüber hinaus mit erheblicher Lärmentwicklung.

Man kann anstelle eines solchen Sauggebläses ein walzenförmiges, am Boden entgegen der Fahrtrichtung angreifendes Aufnahmegerät einsetzen, das bei entsprechend schnellem Antrieb Gras oder dergleichen auf dem Boden befindliches Gut in Rückwärtsfahrtrichtung abschleudernd dieses in einen entsprechend breit bemessenen Einlass eines Sammelbehälters überführt. Hier ergeben sich Schwierigkeiten im Hinblick auf die Füllmenge.

Des weiteren hat man Spezialfahrzeuge vorgeschlagen, die an solche Aufnahmegeräte und Sammelbehälter hinsichtlich der Platzverhältnisse speziell angepasst sind, sich damit aber nicht für den Anbau wahlweise unterschiedlicher Geräte eignen, so dass sie den Fuhrpark entsprechend verteuern und aufgrund geringer Stückzahl der Serienfertigung kaum zugänglich sind.

Bei den hier in Rede stehenden Gerätemarkt handelt es sich um Verwender wie Kommunen, Sportvereine oder dergleichen, die verhältnismäßig kleine wirtschaftliche Einheiten bilden und bei denen aus Kostengründen die Vielfachverwendbarkeit vor allem von Zugfahrzeugen von besonderer Bedeutung ist. Solche Kleintraktoren werden wahlweise und je nach Notwendigkeit mit Mähgeräten, Kehreinrichtungen, Schneefräsen, Schneepflügen, Streugeräten und dergleichen bestückt. Aus dieser Aufstellung ergibt sich schon, dass nicht nur verschiedene Bearbeitungen, sondern auch jahreszeitlich differierende Verwendungen den Einsatz ein und desselben Zugfahrzeugs wünschenswert, wenn nicht notwendig, machen. Ausgehend von einem solchen vielseitig einsetzbaren Zugfahrzeug müssen sich die Geräte nach Abmessung und funktionellem Platzbedarf nach einem solchen Fahrzeug richten; das schließt die Anpassung des Fahrzeugs an ein Gerät in Richtung dessen alleinigen Verwendungszweckes aus wirtschaftlichen Gründen praktisch aus.

Der Erfindung liegt die Aufgabe zugrunde, unter Vermeidung eines Sauggebläses und unter Anpassung der Abmessungen an die seitlichen Begrenzungen des Zugfahrzeugs ein Bodenbearbeitungsgerät, insbesondere für die Aufnahme von Mähgut, zur Verfügung zu stellen.

Dies wird erfindungsgemäß dadurch erreicht, dass die Aufnahmeeinrichtung in Form einer um eine etwa parallel zur Bodenebene verlaufend angeordnete Achse rotierend gehaltenen Walze ausgebildet ist, dass die Zuführvorrichtung eine sich etwa über die axiale Ausdehnung der Walze erstreckende Schneckenwelle aufweist, deren Schneckengänge von beiden Stimseitenbereichen her gesehen unter unterschiedlichem Wickelsinn derart aufeinander zu gerichtet sind, dass bei entsprechender Rotationsrichtung das in die Schneckengänge von der Aufnahmeeinrichtung eingeworfene Gut von beiden Seiten her zu einem Mittelbereich transportiert wird, in welchem auf der Schneckenwelle angeordnet und von dieser mit angetrieben zwischen den gegenläufigen Schneckengängen ein Presswerkzeug vorgesehen ist, das das von den Schneckengängen her angelieferte und das in den Mittelbereich eingeworfene Gut verdichtend und gegebenenfalls zerkleinernd erfasst und in einen entsprechend auf den Mittelbereich beschränkten Zuführkanal einführt und durch dessen freien Hohlraum direkt in den in Richtung Breite des Fahrzeuges ausgedehnter bemessenen Sammelbehälter überführt.

Auf dem zu bearbeitenden Boden befindliches Gut, beispielsweise Mähgut, insbesondere von einem Zwischenachsmähgerät oder Frontmähgerät eines tragenden Zugfahrzeugs angeliefertes Schnittgut, wird also durch eine heckseitig angeordnete, walzenförmige Aufnahmeeinrichtung aufgenommen und über eine Zuführvorrichtung einem Sammelbehälter zugeführt, dessen Eingangsbereich auf einen verhältnismäßig schmalen Bereich zwischen den Rädern des Fahrzeugs beschränkt ist, wenn man dies in geradeaus Fahrtrichtung betrachtet. Diese walzenförmige Aufnahmeeinrichtung ist vornehmlich heckseitig des Zugfahrzeugs auf dessen Hinterachse folgend angeordnet, bei entsprechendem Platz ist auch eine Anordnung näher zur Frontseite des Fahrzeugs vorstellbar. Das von der walzenförmigen Aufnahmeeinrichtung von einer verhältnismäßig breiten überstrichenen Fläche aufgenommene Gut wird dadurch zu einem mittleren Bereich hin konzentriert abgeführt, dass die walzenförmige Aufnahmeeinrichtung das aufgenommene Gut an die nachgeschaltete Zuführvorrichtung übergibt, nämlich in deren Schneckengänge einwirft, die sich von beiden Seitenbereichen her gesehen unter unterschiedlichen Wickelsinn derart aufeinander zu bewegen, dass bei entsprechender Rotationsrichtung das in die Schneckengänge eingeworfene aufgenommene Gut von beiden Seiten her zu einem Mittelbereich transportiert wird. Dort ist ein Presswerkzeug angeordnet, dessen Besonderheit darin besteht, dass es auf der gleichen Welle wie die Schneckenwendeln angeordnet ist und von dieser Welle auch angetrieben wird. Das Presswerkzeug ergreift das von den beiden Seiten der Wendelwelle her angelieferte Gut sowie auch das unmittelbar von der davor angeordneten walzenförmigen Aufnahmeeinrichtung angelieferte Gut und drückt es durch einen mittig entsprechend schmal ausgebildeten Zuführkanal über dessen gesamten freien Kanalquerschnitt in den Sammelbehälter. Die Drehrichtung der Schneckenwelle ist dabei derart getroffen, dass die Anlieferung des Gutes zum Mittelbereich ein Ergreifen dieses Gutes durch das Presswerkzeug und dessen Förderung von unterhalb der Schneckenwelle her in den Zuführkanal ermöglicht, also bei hinsichtlich des Bodenangriffes gegen die Fahrtrichtung drehender Aufnahmeeinrichtung mit entgegengesetztem Drehsinn. Dadurch kann der Zuführkanal ohne Biegungen ausgebildet werden.

Während also die walzenförmige Aufnahmeeinrichtung hinsichtlich des Bodenangriffes gegen die Fahrtrichtung drehend angetrieben ist, wird in bevorzugter Ausführung die Schneckenwelle entgegen dem Drehsinn des walzenförmigen Aufnahmegerätes drehend angeordnet, weshalb das von der Schneckenwelle von beiden Seiten her und im Mittelbereich von dem walzenförmigen Aufnahmegerät direkt dem Presswerkzeug zugeführte Gut in den im Presswerkzeug unterhalb dessen Drehachse mündenden Aufnahme und Presskanal "von unten" zugeführt wird.

Das Presswerkzeug besteht insbesondere aus kammartig versetzten Zinken, die das von dem walzenförmigen Aufnahmegerät mittig und der Schneckenwelle von beiden Seiten her zugeführte Gut in den auf das Presswerkzeug ausgerichteten Eingang des Aufnahme- und Zuführkanals einführen. Das Presswerkzeug kann zur Leistungssteigerung auch mehrere auf gleichen radialen Ebenen um die Drehachse herum angeordneten Zinkenreihen aufweisen, beispielsweise je 4 angeordnete Zinken in 90° Teilung um den Umfang des um die Drehachse rotierenden Zinkenträgers. Um eine insoweit kontinuierliche und stoßarme Erfassung und Förderung des Gutes durch diese Zinken zu erreichen, sind sie in Achsrichtung gesehen schraubenförmig gegeneinander in Umfangsrichtung versetzt angeordnet, und zwar jeweils von den Seiten zur Mitte hin gegensinnig. Oberhalb der Drehachse ist ein gitterartiger Abstreifrechen angeordnet, in dessen schlitzförmige Gitteröffnungen die Zinken eingreifen. Damit wird erreicht, dass die aus dem Eingangsbereich des Zuführkanals aufwärtsdrehenden Zinken von anhaftendem Gut befreit werden. Dieses bleibt also im Zuführkanal, der sich von dem Bereich unterhalb der Drehachse des Presswerkzeugs an der Abstreifseite des Abstreifrechens entlang nach oben in den Sammelbehälter erstreckt. Die kammartig versetzten Zinken sind vorzugsweise auf ihrer in Rotationsrichtung weisenden Kantenseite so gewölbt, dass beim Herausziehen der Zinken aus dem Zuführkanal an dieser gewölbten Kantenseite anhaftendes Gut an dem schlitzförmigen Abstreifrechen erfolgt. Vorteilhaft ist hier ein Winkel zwischen vorderer Zinkenkontur und Abstreifelement von 90° oder größer.

Im Zuführkanal wird das aufgenommene Gut verdichtet und insbesondere nach oben hin in den Sammelbehälter eingefüllt. Dadurch ergibt sich in vorteilhafter Weise eine zusätzliche Verdichtung dieses Gutes bei steigender Füllhöhe im Sammelbehälter durch dessen Eigengewicht. Die dadurch erreichte größere aufzunehmende Gutmenge bei gleichem Sammelbehältervolumen ist hervorzuheben, weil im Gegensatz zu der sonst üblichen Aufgabe des Gutes im oberen Bereich des Sammelbehälters die Zuführung von unten den Verdichtungsprozess verstärkt.

Vorteilhaft ist, dass die walzenförmige Aufnahmeeinrichtung verhältnismäßig langsam umlaufend betrieben werden kann, weil sie das aufgenommene Gut lediglich bis zur unmittelbar dahinter angeordneten Schneckenwelle nebst Presswerkzeug fördern muss. Die Geschwindigkeit kann darüber hinaus von der Art der jeweiligen walzenförmigen Aufnahmeeinrichtung abhängig sein.

Als walzenförmige Aufnahmeeinrichtungen kommt eine Vielzahl von Geräten in Betracht, wie Bürstenwalze, Stachelwalze, Paddelwalze, Zinkenwalze, Kammwalze, Vertikutierwalze und auch - selbst als Mähgerät wirkend - eine Schlegelmähwalze oder dergleichen.

Ein besonderer Vorteil dieser Aufnahme und Aufgabe über einen auf den Mittelbereich beschränkten Zuführkanals in den Sammelbehälter ist, dass dieser nicht nach der Breite der Aufnahmeeinrichtung bemessen ist, sondern lediglich von der Breite des Presswerkzeuges abhängt, nämlich was seine Aufnahmeöffnung anbelangt. Die Breite des Sammelbehälters selbst ist dabei regelmäßig größer als die ausgangsseitige Öffnung des Zuführkanals und richtet sich gegebenenfalls nach den durch die Fahrzeugbreite vorgegebenen Verhältnissen.

Dadurch ergibt sich der besondere Vorteil, dass die Halterung des Behälters am Zugfahrzeug, dessen Aufhängung an diesem also flexibler gestaltet werden kann, weil man sich insoweit auf einen verhältnismäßig schmalen Zwischenachsbereich beschränken kann. So ist die Halterung bzw. der Hubmechanismus des Sammelbehälters nicht seitlich, sondern in dem dem Zugfahrzeug zugewandten Stirnseitenbereich vorzusehen. Aufgrund der geringen Breite des Zuführkanals lässt sich in besonders vorteilhafter Weise im Nahbereich des Zuführkanals erstmals eine Parallelogrammlenkereinrichtung für das Überführen des Sammelbehälters von einer Beladestellung in eine Hochentleerungsstellung von den Seiten weg zur Mitte hin versetzt vorsehen. Eine seitlich des Sammelbehälters anzubringende Überführungsreinrichtung entfällt. Nach bisheriger Vorstellung sind solche vielfach vornehmlich Kehrzwecken dienenden Geräte so gestaltet, das in Abhängigkeit von der Breite der Kehrwalze auch die Übernahme des Kehrgutes in den entsprechend zu bemessenden Sammelbehälter gestaltet sein muss, was in nachteiliger Weise die Anordnung von Hubmechanismen, Halterungen und dergleichen seitlich des Behälters bedingt, so dass ein entsprechender Überstand dem Fahrzeug gegenüber entsteht.

Die Gesamtbreite von Zugfahrzeug und Bodenbearbeitungsgerät muss nicht notwendig übereinstimmen, das Zugfahrzeug kann schmaler sein. Dann besteht die Forderung, dass das Gesamtgerät nicht über die Breite des walzenförmigen Aufnahmegerätes und dessen Antrieb hinausgeht. Im übrigen arbeitet ein hier zu verwendendes Zwischenachsmähgerät bereits derart, dass das gemähte Gut sich in einem Mittelbereich zwischen den Hinterrädern sammelt und von diesen nicht überrollt wird. Die nachgeschaltete Walze ist dann ein wenig breiter, um eine sichere und auch Streubestandteile erfassende Aufnahme der Güter sicherzustellen. Dabei ist aber Rücksicht darauf zu nehmen, dass die Breite der walzenförmigen Aufnahmeeinrichtung, mit der nicht nur gemähtes Gut aufgenommen werden soll, grundsätzlich über die Schneckenwendel hinweg das aufgenommene Gut auf einen schmaleren Bereich als den Zwischenachsbereich zusammenfasst und dem Presswerkzeug, das auf diesen Bereich begrenzt ist, zuführt.

Bei häufigerem Mähen und damit entsprechend geringem Mähgutanfall oder dergleichen wird von daher in für das Presswerkzeug vorteilhafter Weise das Gut durch die Schneckenwendel zusammengefasst, so dass sich für das Pressen eine handhabbare Menge ergibt.

Bei den bisherigen Kehrmaschinen musste man wegen des Einwerfens mit verhältnismäßig hohen Drehzahlen arbeiten, was natürlich zu einer Aufwirbelung von Dreck und insbesondere auch Staub führt. Das nunmehrige System arbeitet mit niedrigeren Walzendrehzahlen und damit mit geringerer Lärm und Staubentwicklung.

Das erfindungsgemäße Bodenbearbeitungsgerät kann als Huckepackgerät gebaut sein, dass heißt lediglich die am Boden angreifende Walze bewegt sich auf diesem schwimmend, zum Beispiel durch Stützräder tiefengeführt. Das bedeutet, dass der Aufnahmekopf aus walzenförmiger Aufnahmeeinrichtung, deren Halterung und Antriebseinrichtung vorzugsweise um den Nahbereich des zentralen Presswerkzeugs bzw. den Eingang des Zuführkanals pendelnd aufgehängt ist, so dass sich im direkten Übergabebereich möglichst wenig Relativbewegung zwischen dem pendelnden Aufnahmekopf und der nachfolgenden, insoweit "feststehenden" übrigen Einrichtung ergibt. Eine andere Ausführungsmöglichkeit besteht darin, dass das gesamte Bodenbearbeitungsgerät mit walzenförmiger Aufnahmeeinrichtung, Sammelbehälter etc. auch als Anhängeeinheit für sich ausgebildet sein kann.

Die Erfindung wird anhand von in der Zeichnung wiedergegebenen Beispielen nachstehend näher erläutert. Es zeigen:
- Figuren 1 und 2: zwei perspektivische Ansichten des Gerätes aus verschiedenen Blickrichtungen;
- Figur 3: eine perspektivische Ansicht eines Gerätes mit stachelwalzenförmiger Ausbildung der Aufnahmeeinrichtung;
- Figuren 4 bis 6: perspektivische Ansichten eines Gerätes mit Paddelwalzen als Aufnahmeeinrichtung;
- Figur 7: eine etwas vergrößerte Teildarstellung des Beispieles gemäß Figur 5;
- Figur 8: eine vergrößerte Teildarstellung des Ausführungsbeispieles gemäß Figur 3;
- Figur 9: eine schematisierte Seitenansicht des getriebetechnischen Aufbaus des Gerätes nach den vorgenannten Figuren;

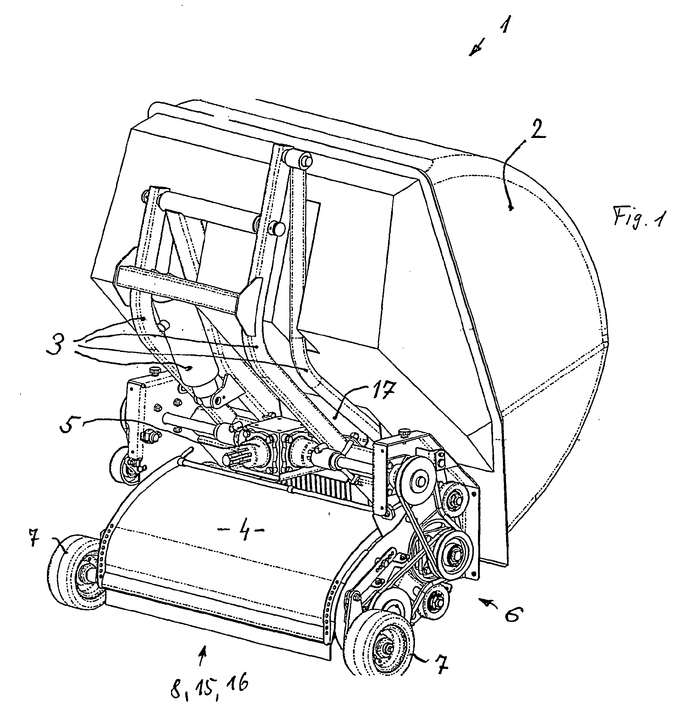

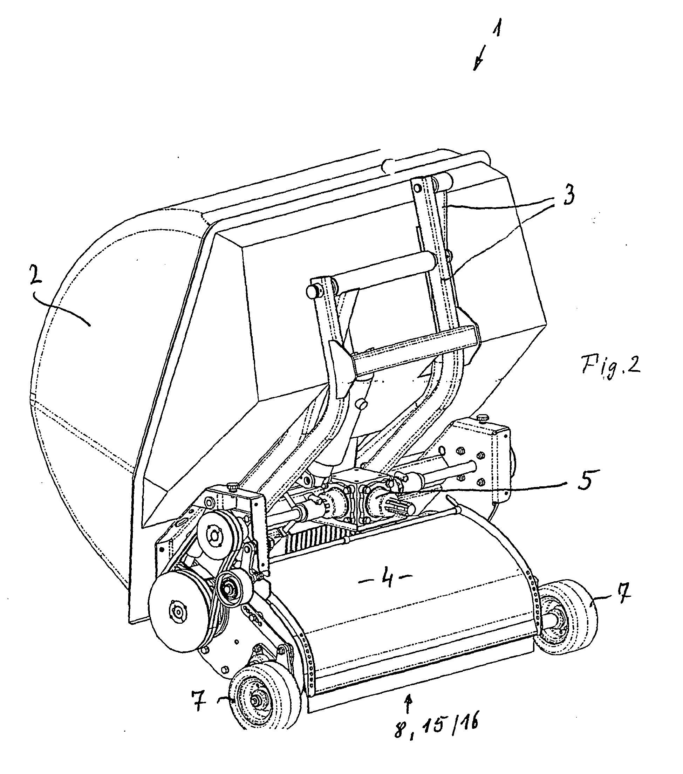

In den Figuren 1 und 2 sind zwei perspektivische Ansichten ist ein Gerät 1 der in Rede stehenden Art wiedergegeben, das einen Sammelbehälter 2 aufweist, der über ein Parallelogrammlenkergestänge 3 gegenüber einem Chassiselement zwischen einer Aufnahmelage - Anschluss an einen Zuführkanal 17 - und einer nicht dargestellten Hochentleerungslage in bekannter Weise versetzbar ist. Hervorzuheben ist, dass durch die auf einen in Breitenrichtung gesehen verhältnismäßig schmalen Mittelbereich beschränkte Zuführung des aufzunehmenden Gutes in den Sammelbehälter 2 zwischen dem Zuführkanal 17 und den seitlichen Begrenzungen des Sammelbehälters 2 soviel Platz verbleibt, dass das Parallelogrammlenkergestänge 3 seitlich nicht übersteht, sondern zum Mittelbereich hin konzentriert angeordnet werden kann, was vom besonderem Vorteil ist.

Die Aufnahmeeinrichtung 15 und die Zuführvorrichtung 8 sind in den Beispielen nach den Figuren 1 und 2 durch eine Abdeckung 4 übergriffen, die zugleich als Führung für das von der Aufnahmeeinrichtung 15 aufgenommene Gut zu der Zuführvorrichtung 8 dient.

Über einen Zapfwellenantriebe 5 wird eine Getriebeeinrichtung 6 angetrieben, die über Keilriementriebe mit der Schneckenwelle 9 der Zuführvorrichtung 8 einerseits und der walzenförmigen Aufnahmeeinrichtung 15 andererseits getrieblich verbunden ist.

Dass den Sammelbehälter und die Walzeneinrichtung sowie die Zuführvorrichtung und den Zuführkanal aufnehmende Chassisteil ist im vorliegenden Beispiel über zwei einstellbare Stützräder 7 am Boden abgestützt, wodurch der Abstand der Aufnahmeeinrichtung gegenüber dem Boden bestimmbar ist und/oder die Lage der walzenförmigen Aufnahmeeinrichtung bei pendelnder Aufhängung an Bodenunebenheiten angepasst werden kann.

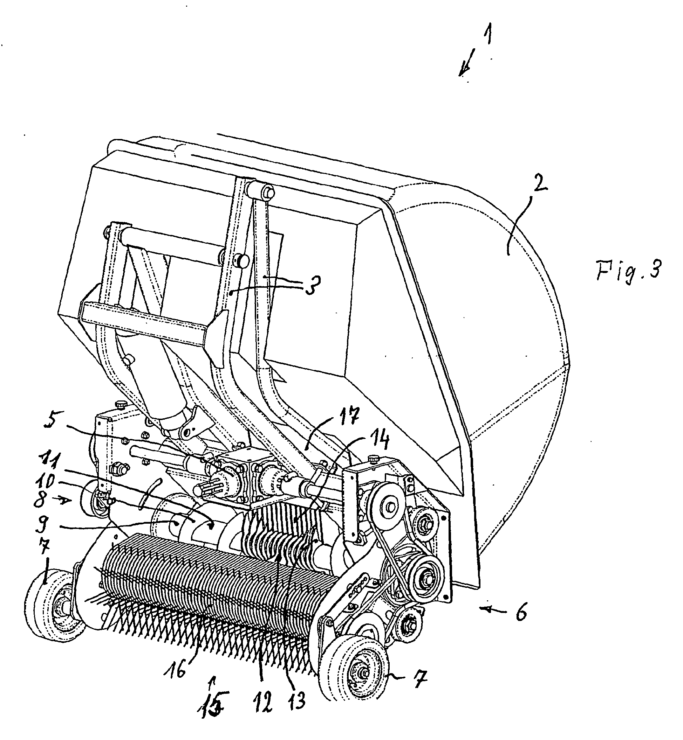

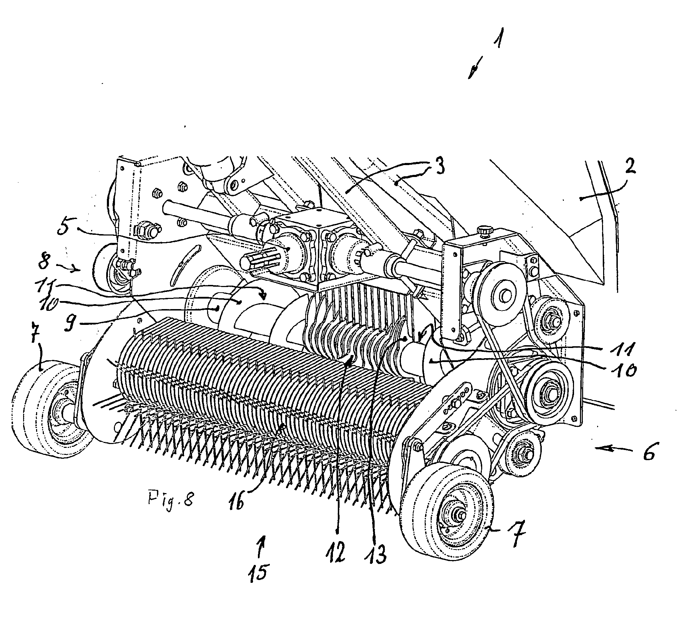

Figur 3 zeigt in perspektivischer Ansicht ein Gerät der in Rede stehender Art, das bei abgenommener Abdeckung 4 eine Stachel- oder Zinkenwalze als Aufnahmeeinrichtung zeigt. Eine vergrößerte Teildarstellung davon findet sich in Figur 8. Aus diesen Figuren ist nicht nur die Ausbildung der Aufnahmeeinrichtung 15 als Stachelwalze 16 ersichtlich, sondern der Aufbau der Zuführvorrichtung 8 aus einer Schneckenwelle 9, an der von beiden Seitenbereichen her Schneckenwendel 10 mit unterschiedlichen Steigung ausgebildet sind, so dass zwischen den beidseitigen Schneckenwendeln 10 Schneckengänge 11 derart unterschiedliche Förderwirkung ergeben, dass von beiden Seiten her in die Scheckengänge 11 von der Stachelwalze 16 eingeworfenes Gut zu einem mittleren Bereich der Schneckenwelle 9 gefördert wird, in dem sich ein Presswerkzeug 12 befindet. Während die Stachelwalze 16 hinsichtlich ihres bodenseitigen Angriffs der Fahrtrichtung des nicht dargestellten angeschlossenen Zugfahrzeugs entgegengerichtet arbeitend dreht, läuft die Schneckenwelle in Gegendrehrichtung um, so dass in die Schneckengänge 11 eingeworfenes Gut zur Mitte hin transportiert von dem Presswerkzeug 12 im unteren Halbbereich erfasst und in den Zuführkanal 17 überführt wird, dessen frontseitige Begrenzung ein Abstreifrechen 14 bildet, in den die Zinken 13 des Presswerkzeuges 12 im Zuge ihrer Förderbewegung eingreifen, so dass das an dem Abstreifrechen 14 von den Zinken entfernte Gut im Zuführkanal 17 verbleibt. Somit sammet sich im Zuführkanal 17 das von dem Presswerkzeug - gegebenenfalls auch zerkleinerte - Gut und wird im Zuge der Aufwärtsbewegung durch den Zuführkanal 17 zum Sammelbehälter hin verdichtet, welche Verdichtungswirkung sich bei zunehmender Behälterfüllung noch verstärkt.

Wie erkennbar, sind die Zinken 13 des Presswerkzeugs 12 gegeneinander schraubenförmig von beiden Seiten her gesehen gegensinnig versetzt angeordnet, wodurch ein stoßfreies kontinuierliches Arbeiten begünstigt wird. Es ist auch möglich, mehrere Zinkenreihen in Umfangsrichtung versetzt anzuordnen. Der Antrieb von Aufnahmeeinrichtung und Zuführvorrichtung ist wie im Zusammenhang mit den Figuren 1 und 2 bereits geschildert gleichgestaltet.

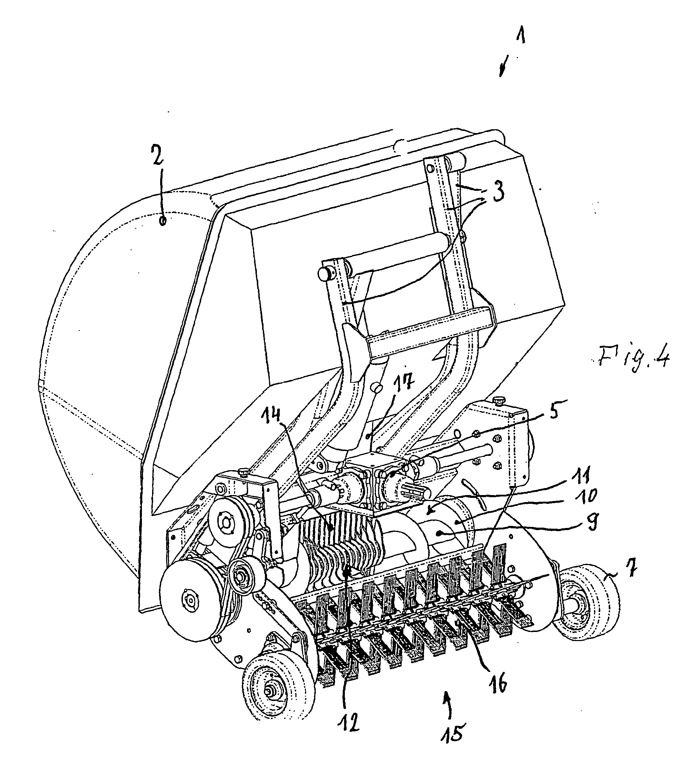

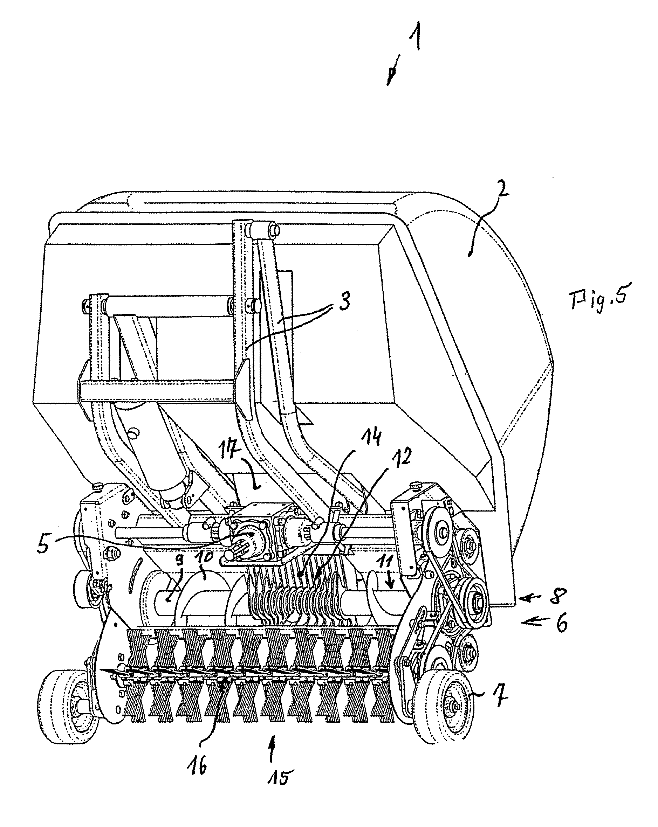

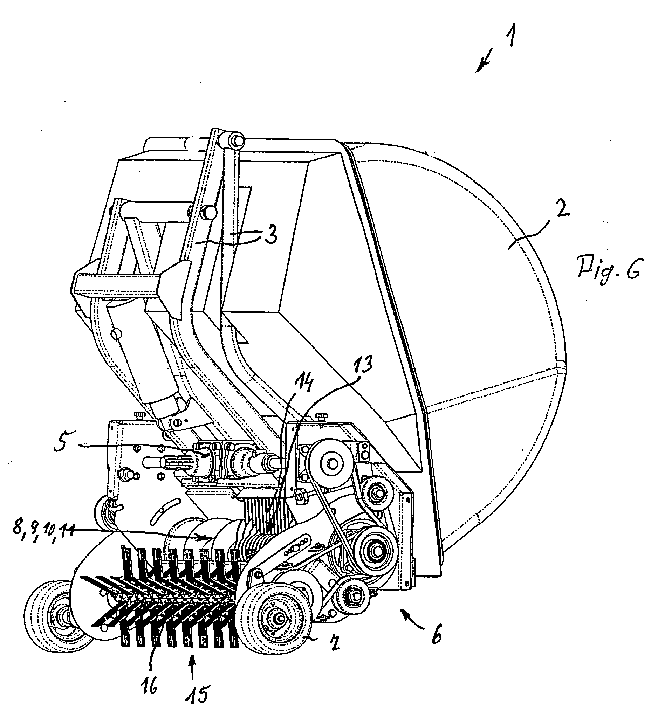

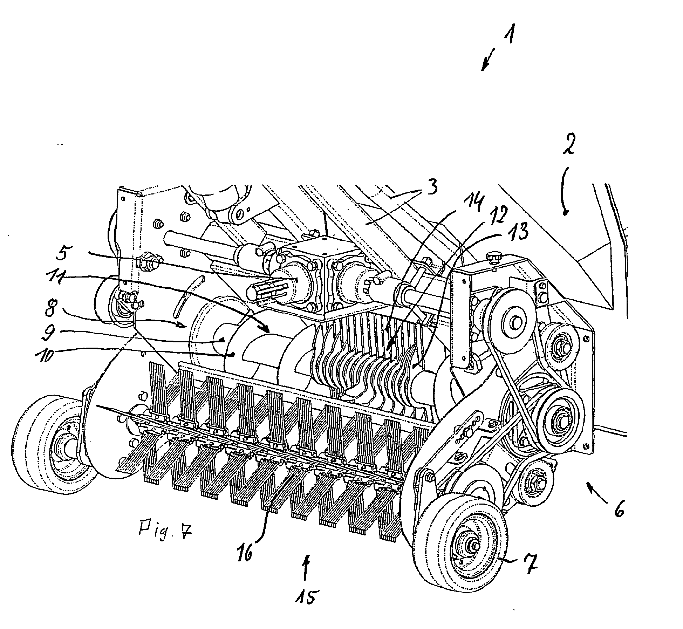

Die Figuren 4 bis 6 zeigen ein Ausführungsbeispiel in Ausführung der Aufnahmeeinrichtung 15 als Paddelwalze 16 oder dergleichen bei sonst übereinstimmender Ausführung mit den vorgeschilderten Ausführungsbeispielen, wobei anzunehmen ist, dass unter der Abdeckung 4 bei dem Beispiel nach den Figuren 1 und 2 als Aufnahmeeinrichtung 15 eine Bürstenwalze oder eine Schlegelmähwalze angeordnet ist. Figur 7 zeigt einen vergrößerten Teil des Beispieles gemäß Figur 5, woraus noch einmal insbesondere der Aufbau der Zuführvorrichtung 8 mit der Schneckenwelle 9, den gegenläufigen Schneckengängen 11 und den schraubenförmig orientierten Zinken 13 des Presswerkzeuges 12 hervorgehen.

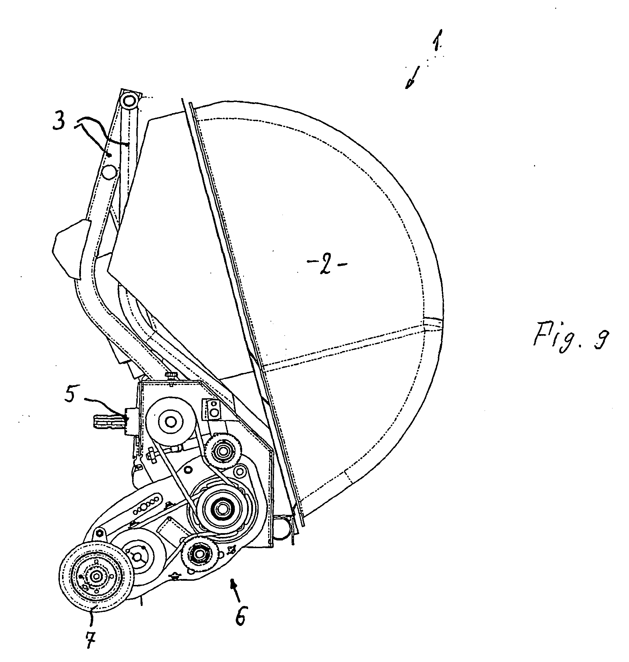

Figur 9 zeigt in schematisierter Teildarstellung in Seitenansicht den Sammelbehälter 2, das zugehörige Parallelogrammlenkergestänge 3 sowie das Keilriemengetriebe für die Aufnahmeeinrichtung 15 und die Zuführvorrichtung von einem Zapfwellengetriebe 5 ausgehend.

### BEZUGSZEICHENLISTE

- 1: Bodenbearbeitungsgerät
- 2: Sammelbehälter
- 3: Parallelogrammgestänge (Lenker)
- 4: Abdeckung
- 5: Zapfwellenantrieb
- 6: Getriebe für den Antrieb von Aufnahmeeinrichtung (Walze) und Zuführvorrichtung (Schneckenwelle)
- 7: Stützräder einstellbar
- 8: Zuführvorrichtung
- 9: Schneckenwelle
- 10: Schneckenwendel
- 11: Schneckengänge
- 12: Presswerkzeug
- 13: Zinken von Presswerkzeug
- 14: Abstreifrechen von Presswerkzeug
- 15: (Walzenförmige) Aufnahmeeinrichtung
- 16: Walze, Bürsten-, Paddel-, Zinken-Walze, Schlegelmähwalze
- 17: Zuführkanal

## Patentansprüche

1. Bodenbearbeitungsgerät (1) für kommunale Flächen, Parkanlagen, Sportflächen, insbesondere Golfplätzen, und dgl. in Ausbildung für den Anbau als Huckepackgerät mit nur am Boden angreifender Walze oder Anhängegerät an motorgetriebene Fahrzeuge, insbesondere auch Kleintraktoren, das einen Sammelbehälter (2) für die Aufnahme von auf dem Boden befindlichen Gut wie Gras, Laub oder dgl., eine Zuführvorrichtung (8) für dieses Gut zu dem Sammelbehälter (2) sowie eine Aufnahmeeinrichtung (15) für das Gut von dem Boden und dessen Übergabe an die Zuführvorrichtung (8) aufweist, wobei rotierend angetriebene Teile des Gerätes (1) vorzugsweise an den Antriebsmotor des Fahrzeugs getrieblich anschließbar sind,
**dadurch gekennzeichnet,**
**dass** die Aufnahmeeinrichtung (15) in Form einer um eine etwa parallel zur Bodenebene verlaufend angeordnete Achse rotierend gehaltenen Walze (16) ausgebildet ist, dass die Zuführvorrichtung (8) eine sich etwa über die axiale Ausdehnung der Walze (16) erstreckende Schneckenwelle (9) aufweist, deren Schneckengänge (11) von beiden Stimseitenbereichen her gesehen unter unterschiedlichem Wickelsinn derart aufeinander zu gerichtet sind, dass bei entsprechender Rotationsrichtung das in die Schneckengänge (11) von der Aufnahmeeinrichtung (15) eingeworfene Gut von beiden Seiten her zu einem Mittelbereich transportiert wird, in welchem auf der Schneckenwelle (9) angeordnet und von dieser mit angetrieben zwischen den gegenläufigen Schneckengängen (11) ein Presswerkzeug (12) vorgesehen ist, das das von den Schneckengängen (11) her angelieferte und das in den Mittelbereich eingeworfene Gut verdichtend und gegebenenfalls zerkleinernd erfasst und in einen entsprechend auf den Mittelbereich beschränkten Zuführkanal (17) einführt und durch dessen freien Hohlraum direkt in den in Richtung Breite des Fahrzeuges ausgedehnter bemessenen Sammelbehälter (2) überführt.

2. Gerät nach Anspruch 1,
**dadurch gekennzeichnet,**
**dass** die Schneckenwelle (9) derart drehend angetrieben ist, dass das Presswerkzeug (12) das von der Aufnahmeeinrichtung (15) der Zuführeinrichtung angelieferte Gut mehr von unten in den vorzugsweise geradlinigen Zuführkanal (17) einführt, also entgegen der Drehrichtung der Aufnahmeeinrichtung (15) die vorzugsweise hinsichtlich ihres Angriffes am Boden entgegen der Fahrtrichtung arbeitet.

3. Gerät nach Anspruch 1,
**dadurch gekennzeichnet,**
**dass** das Presswerkzeug (12) kammartig versetzte Zinken (13) aufweist, gegebenenfalls auch mehrere axiale Reihen von Zinken (13) in Umfangsrichtung der Schneckenwelle (9) versetzt - beispielsweise jeweils um 90° gegeneinander - aufweist.

4. Gerät nach einem der Ansprüche 1 bis 3,
**dadurch gekennzeichnet,**
**dass** das Presswerkzeug (12) kammartig versetzte Zinken (13) aufweist, die in Achsialrichtung der Schneckenwelle (9) gesehen schraubenförmig gegeneinander in Umfangrichtung versetzt angeordnet sind, und zwar jeweils von den Seiten her zur Mitte hin gesehen gegensinnig.

5. Gerät nach einem der Ansprüche 1 bis 4,
**dadurch gekennzeichnet,**
**dass** das Presswerkzeug (12) einen oberhalb der Drehachse der Schneckenwelle (9) angeordneten gitterförmigen Abstreifrechen (14) aufweist, in dessen schlitzförmige Gitteröffnungen die Zinken (13) des Presswerkzeuges (12) eingreifen, die bevorzugt an der in Rotationsrichtung vorn liegende Kante gewölbt ausgebildet sind, wobei insbesondere zwischen dieser vom liegenden Zinkenkante und den benachbarten Abstreifschlitzen ein Winkel von 90° oder größer vorgesehen ist.

6. Gerät nach einem der Ansprüche 1 bis 5,
**dadurch gekennzeichnet,**
**dass** der Zuführkanal (17) aufwärts gerichtet ist und an seinem dem Presswerkzeug (12) zugewandten Endbereich wenigstens mit einem Teilbereich seiner Wandung bis unterhalb der Achse der Schneckenwelle (9) reichend ausgebildet ist.

7. Gerät nach einem der Ansprüche 1 bis 6,
**dadurch gekennzeichnet,**
**dass** der Sammelbehälter (2) zwischen einer Aufnahmestellung unter Anschluss an den Zuführkanal (17) und einer Hochentleerungsstellung davon abgehoben mittels einer Überführungseinrichtung, insbesondere hydraulisch gesteuertes Parallelogrammgestänge (13), versetbar ist, welches Parallelogrammgestänge (13) im Nahbereich des Zuführkanals (17) innerhalb der seitlichen Begrenzungen des Sammelbehälters (2) angeordnet ist.

8. Gerät nach einem der Ansprüche 1 bis 7,
**dadurch gekennzeichnet,**
**dass** die Aufnahmeeinrichtung (15) für einen großflächigen möglichst gleichbleibendem Angriff auch an einen nicht ebenen Boden pendelnd aufgehängt ausgebildet ist, insbesondere durch am Boden angreifende Stützräder (7) gesteuert, bevorzugt pendelnd im Bereich des Presswerkzeugs (12) aufgehängt.

9. Gerät nach einem der Ansprüche 1 bis 8,
**dadurch gekennzeichnet,**
**dass** die walzenförmige Aufnahmeeinrichtung (15/16) als Bürstenwalze, Paddelwalze, Zinkenwalze oder Schlegelmähwalze ausgebildet ist.

10. Gerät nach einem der Ansprüche 1 bis 9,
**dadurch gekennzeichnet,**
**dass** der Antrieb der walzenförmigen Aufnahmeeinrichtung (15/16) und der Zuführvorrichtung (8) nebst Presswerkzeug (12) von einem Zapfwellenantrieb (5) abgeleitet über seitlich angeordnete Getriebeeinrichtungen (6) der Aufnahmeeinrichtung (15/16) und der Zuführvorrichtung (8) erfolgt.

## Claims

1. Ground preparation apparatus (1) for communal areas, parks, sports fields, particularly golf courses and the like, designed for installation as piggyback equipment with only a roller acting on the ground or as a trailer drawn by motor-driven vehicles, particularly small tractors, which comprises a collector (2) for holding material found on the ground, such as grass, leaves or the like, a feed device (8) for feeding this material to the collector (2) and an intake device (15) for taking the material from the ground and transferring it to the feed device (8), wherein rotationally driven parts of the apparatus (1) may preferably be connected in geared manner to the drive motor of the vehicle, **characterised in that** the intake device (15) is constructed in the form of a roller (16) secured so as to rotate about an axle mounted substantially parallel to the plane of the ground, **in that** the feed device (8) comprises a worm-gear shaft (9) extending substantially over the axial extent of the roller (16), the spirals (11) of which, viewed from the two end face regions, are directed towards one another in different directions of winding such that when rotation occurs the material thrown into the spirals (11) from the intake device (15) is transported from both ends to a central region in which a compressing tool (12) is provided between the contra-rotating spirals (11), which is mounted on the worm-gear shaft (9) and driven thereby, wherein said compressing tool gathers up the material fed in from the spirals (11) and the material thrown into the central region, compacts it and optionally comminutes it and feeds it into a feed channel (17) correspondingly restricted to the central region and conveys it through the free space thereof directly into the collector (2) which widens out in the widthways direction of the vehicle.

2. Apparatus according to claim 1, **characterised in that** the worm-gear shaft (9) is rotationally driven so that the compressing tool (12) feeds the material supplied by the intake device (15) of the feed device more from below into the preferably linear feed channel (17), i.e. counter to the direction of rotation of the intake device (15) which preferably operates counter to the direction of travel with respect to its action on the ground.

3. Apparatus according to claim 1, **characterised in that** the compressing tool (12) has tines (13) which are offset in the manner of a comb, and optionally also has a plurality of axial rows of tines (13) offset in the circumferential direction of the worm-gear shaft (9), for example at 90° to one another.

4. Apparatus according to one of claims 1 to 3, **characterised in that** the compressing tool (12) has tines (13) which are offset in the manner of a comb, which are helically offset from one another in the circumferential direction, viewed in the axial direction of the worm-gear shaft (9), and specifically in contra-rotatory manner viewed from the sides towards the centre.

5. Apparatus according to one of claims 1 to 4, **characterised in that** the compressing tool (12) has a grid-like stripping rake (14) provided above the rotation axis of the worm-gear shaft (9), in whose slot-like grid openings the tines (13) of the compressing tool (12) engage, said tines preferably being of convex construction at the edge which is foremost in the direction of rotation, while in particular an angle of 90° or more is provided between this foremost edge of the tines and the adjacent stripping slots.

6. Apparatus according to one of claims 1 to 5, **characterised in that** the feed channel (17) is directed upwards and at its end region facing the compressing tool (12) is constructed to extend with at least part of its wall to below the axis of the worm-gear shaft (9).

7. Apparatus according to one of claims 1 to 6, **characterised in that** the collector (2) can be adjusted between a receiving position where it is connected to the feed channel (17) and a high emptying position raised above the latter position by means of a shifting device, particularly a hydraulically controlled parallelogram linkage (13), said parallelogram linkage (13) being arranged in the vicinity of the feed channel (17) within the lateral boundaries of the collector (2).

8. Apparatus according to one of claims 1 to 7, **characterised in that** the intake device (15) is designed to be suspended in oscillating manner for the largest possible area of continuous contact even with uneven ground and in particular is controlled by support wheels (7) acting on the ground, preferably suspended in oscillating manner in the region of the compressing tool (12).

9. Apparatus according to one of claims 1 to 8, **characterised in that** the roller-shaped intake device (15/16) is constructed as a brush roller, paddle roller, tined roller or beater-type mowing roller.

10. Apparatus according to one of claims 1 to 9, **characterised in that** the drive of the roller-shaped intake device (15/16) and of the feed device (8) together with the compressing tool (12) is derived from a power takeoff (5) via laterally disposed gear means (6) of the intake device (15/16) and the feed device (8).

## Revendications

1. Appareil pour la préparation du sol (1) pour des terrains communaux, aires de stationnement, terrains de sports, en particulier de terrains de golf, et analogues, dans une configuration pour son montage comme appareil suspendu avec seulement un rouleau en prise avec le sol ou comme appareil attelé à des véhicules motorisés, en particulier des petits tracteurs, qui comprend un réservoir collecteur (2) pour la réception de matières se trouvant sur le sol, comme de l'herbe, des feuilles ou analogues, un dispositif de transport (8) de cette matière vers le réservoir collecteur (2) ainsi qu'un dispositif de ramassage (15) pour la matière provenant du sol et son transfert au dispositif de transport (8), dans lequel des parties de l'appareil (1) mues en rotation peuvent être raccordées par une transmission de préférence au moteur d'entraînement du véhicule,
**caractérisé en ce que**
le dispositif de ramassage (15) prend la forme d'un rouleau (16) maintenu en rotation autour d'un axe sensiblement parallèle au plan du sol, le dispositif de transport (8) présente un arbre à vis sans fin (9) s'étendant environ sur l'extension axiale du rouleau (16), dont les spires de vis (11), vues des deux régions d'extrémité frontales, sont dirigées l'une vers l'autre avec un sens d'enroulement différent, de telle façon que, pour un sens de rotation correspondant, la matière projetée dans les spires de vis (11) par le dispositif de ramassage (15) soit transportée à partir des deux côtés vers une région centrale, dans laquelle on prévoit, disposé sur l'arbre à vis sans fin (9) et entraîné par celui-ci entre les spires hélicoïdales opposées (11), un outil de pressage (12), qui saisit la matière envoyée par les spires hélicoïdales et la matière projetée dans la région centrale en la comprimant et éventuellement en la découpant, et l'introduit dans un canal de transport (17) limité de façon correspondante à la région centrale et la transfère, à travers l'espace creux libre de celui-ci, directement dans le réservoir collecteur (2) dimensionné en largeur de façon adaptée à la largeur du véhicule.

2. Appareil selon la revendication 1,
**caractérisé en ce que**
l'arbre à vis sans fin (9) est entraîné en rotation de telle manière que l'outil de pressage (12) introduise la matière fournie par le dispositif de ramassage (15) du dispositif de transport plus par le bas dans le canal de transport (17) de préférence rectiligne, donc contre le sens de rotation du dispositif de ramassage (15), qui opère de préférence, en ce qui concerne sa prise avec le sol, dans le sens contraire à l'avancement.

3. Appareil selon la revendication 1,
**caractérisé en ce que**
l'outil de pressage (12) comprend des dents (13) décalées en forme de peigne, éventuellement plusieurs rangées axiales de dents (13) décalées dans la direction périphérique de l'arbre à vis sans fin (9) - par exemple chaque fois de 90° l'une par rapport à l'autre.

4. Appareil selon l'une quelconque des revendications 1 à 3,
**caractérisé en ce que**
l'outil de pressage (12) comprend des dents (13) décalées en forme de peigne qui, vues en direction axiale de l'arbre à vis sans fin (9), sont disposées en hélice avec un décalage en direction périphérique l'une par rapport à l'autre, notamment chaque fois en sens contraire, vues depuis les côtés vers le milieu.

5. Appareil selon l'une quelconque des revendications 1 à 4,
**caractérisé en ce que**
l'outil de pressage (12) comprend un râteau de raclage en forme de grille (14), disposé au-dessus de l'axe de rotation de l'arbre à vis sans fin (9), avec des ouvertures de grille en forme de fentes dans lesquelles s'engagent les dents (13) de l'outil de pressage (12), qui sont de préférence de forme courbe sur l'arête placée en avant dans le sens de rotation, dans lequel on prévoit un angle de 90° ou plus en particulier entre cette arête avant des dents et les fentes de raclage voisines.

6. Appareil selon l'une quelconque des revendications 1 à 5,
**caractérisé en ce que**
le canal de transport (17) est dirigé vers le haut et est réalisé, dans sa région d'extrémité tournée vers l'outil de pressage (12), au moins avec une région partielle de sa paroi s'étendant jusqu'en dessous de l'arbre à vis sans fin (9).

7. Appareil selon l'une quelconque des revendications 1 à 6,
**caractérisé en ce que**
le réservoir collecteur (2) peut être déplacé entre une position de ramassage avec raccordement au canal de transport (17) et une position de déversement, soulevée par rapport à celle-ci, au moyen d'un dispositif de transmission, en particulier un parallélogramme articulé (13) à commande hydraulique, parallélogramme (13) qui est disposé à proximité immédiate du canal de transport (17) à l'intérieur des parois latérales du réservoir collecteur (2).

8. Appareil selon l'une quelconque des revendications 1 à 7,
**caractérisé en ce que**
le dispositif de ramassage (15) est réalisé avec une suspension oscillante en vue d'une prise constante aussi étendue que possible même sur un sol non plan, en particulier par des roues d'appui (7) en prise avec le sol, de préférence suspendues de façon oscillante dans la région de l'outil de pressage (12).

9. Appareil selon l'une quelconque des revendications 1 à 8,
**caractérisé en ce que**
le dispositif de ramassage en forme de rouleau (15/16) est un rouleau à brosses, un rouleau à palettes, un rouleau à dents ou un rouleau de tondeuse à fléaux.

10. Appareil selon l'une quelconque des revendications 1 à 9,
**caractérisé en ce que**
l'entraînement du dispositif de ramassage en forme de rouleau (15/16) et du dispositif de transport (8) en plus de l'outil de pressage (12), assuré à partir d'une prise de force (5), s'effectue par l'intermédiaire de dispositifs de transmission (6) disposés latéralement au dispositif de ramassage (15/ 16) et au dispositif de transport (8).
